# EUROPEAN PATENT APPLICATION

(11) **EP 2 695 520 A1**
(43) Date of publication of application: **12.02.2014**
(21) Application number: 13179414.1
(22) Date of filing: 06.08.2013
(51) Int. Cl.: A21C 15/00

(54) **Food vending system**

(30) Priority: 07.08.2012 NL 2009290
(71) Applicant: Craftworks B.V., 2153 PJ Nieuw-Vennep (NL)
(72) Inventor: Dessing, Jacobus Petrus Maria, 2131 CV Hoofddorp (NL); Oosterling, Pieter Adriaan, 4508 KC IJzendijke (NL)
(74) Representative: De Vries & Metman

(57) **Abstract**

An apparatus (1) for preparing sandwiches and/or salads is provided, comprising a transporter (23) for transporting a carrier (55), which may contain a unit portion of a sandwich base product (57), and at least one dispenser (35) configured to dispense an ingredient on the carrier from a supply (37) of ingredients in which ingredient unit portions are individually packaged between packaging layers. Said at least one dispenser comprises a separator configured to separate the packaging layers from each unit portion of the ingredient to be dispensed.

## Description

### TECHNICAL FIELD

The present disclosure relates to a system, an apparatus and a method for preparing salads and/or sandwiches, such as rolls provided with cheese, ham, salads and/or hamburgers. The preparation of such sandwich or salad may be on-demand.

### BACKGROUND

There is an ongoing demand for ready-to-eat foodstuffs, e.g. from take-away restaurants, which, however, may clash with the concurrent demands for fresh and healthy food, for hygiene and/or for low costs. For instance, preparation of salads or sandwiches by hand enables providing freshly prepared products, but requires handling space, trained personnel and cleaning efforts. Vending pre-prepared and in particular pre-packaged products only requires adequate storage space, however, at the cost of reduced freshness.

In reaction to this, US 5 113 754, EP 1 488 701, FR 2 852 789, FR 2 629 701, US 4,944,218, WO 03/107284, US 4,202,260, US 2001/024671 and GB 1,096,283 provide apparatus for automated preparation of sandwiches and other food products with toppings which aim to reduce or obviate the manual labour associated with the preparation. However, these apparatus suffer from complexity of construction, maintenance and/or cleaning.

Further improvements are therefore desired.

### SUMMARY

Herewith, an improved apparatus for preparing sandwiches and/or salads is provided, prepared from a number of ingredients. The apparatus comprises a transporter for transporting a carrier, which may contain a unit portion of a sandwich base product and at least one dispenser configured to dispense an ingredient on the carrier, e.g. on a sandwich base product contained in the carrier, from a supply of ingredients in which ingredient unit portions are individually packaged packaging layers. Said at least one dispenser comprises a separator configured to separate the packaging layers from each ingredient unit portion to be dispensed.

The sandwich base product may comprise bread in the form of one or more slices, buns etc., and/or one or more crackers, tortillas, etc. By transporting the carrier, and in particular by transporting the sandwich base product and the carrier as an assembly, there is no need to engage the salad or the sandwich base product itself and crumbs, spilled ingredient etc. may fall in the carrier. This benefits hygiene.

By supplying ingredients packaged in individually packaged unit portions, there is no need to access and/or handle a large amount of the ingredient to separate a unit portion from it, e.g. by slicing off a slice from a block of cheese. This benefits freshness of the ingredients, and efficiency, hygiene and control of supply and/or inventory. Further, this allows to optimise storage conditions for different ingredients, and prevents undesired mixing of flavours from different ingredients.

Providing the dispenser with a separator facilitates automated preparation of the sandwich or salad. The separation of the ingredient unit portion and the packaging material may provide the dispense in one integrated operation.

The apparatus may comprise plural dispensers for dispensing ingredients on the carrier and/or on a possible sandwich base product in it, and the transporter may be configured for transporting the carrier to one or more dispensers for dispensing the according ingredient on (at least part of) the sandwich base product or the salad, so that relatively complex sandwiches and/or salads may be prepared. In an embodiment, the apparatus may comprise a controller for controlling preparation of sandwiches and/or salads according to different recipes, e.g. associated with different combinations, sequences and/or amounts of ingredients to be dispensed.

Preferably, the salad or the sandwich is dispensed together with the carrier, wherein the carrier may be a disposable carrier. Thus crumbs, ingredient spills etc. are removed from the apparatus together with the prepared product, increasing hygiene and reducing cleaning costs.

The apparatus may conveniently comprise a dispenser configured to dispense the ingredient from a supply, in particular a supply stored in a container, on a reel etc., in which supply ingredient unit portions are individually packaged between packaging layers, comprising at least one foil connecting the unit portions extending substantially continuously along plural unit portions, wherein the dispenser comprises a separator configured to separate the packaging foil from each unit portion to be dispensed. In this way, the foil may be used for advancing the supply from its storage by pulling on the foil.

In a particularly efficient embodiment, the dispenser is configured to dispense an assembly of a carrier with a unit portion of the sandwich base product placed in the carrier. Thus, an integrated and/or self-contained apparatus is provided.

At least one of the packaging layers of a packaged ingredient to be dispensed may be a foil. In particular, the ingredient unit portions may be packaged between opposing layers of packaging foil. The packages may be sealed e.g. for hygiene, e.g. by gluing, welding or another suitable technique. The separator may comprise a peeler to separate a thus packaged ingredient and the packaging foil(s). The peeler may in particular be configured to separate opposing foils from each other and from the packaged ingredient. Thus the packaged unit portion may be dispensed. In particular, the separator may comprise two peelers for separating opposing packaging foils, e.g. pulling the foils away from each other. In such case, the peeling edges may have different radii, e.g. accommodating different foils.

The layers may be substantially identical or be different and at least one layer may comprise a stack of connected layers, e.g. being a coated or laminated product. For one or more ingredients, in particular a sandwich base product, a packaging layer may provide a preformed shell or tray which may be relatively rigid, and to which a relatively flexible foil may be attached to close off the tray. Such tray may serve as the carrier for the sandwich base product, so that the assembly can be dispensed by peeling off the closing foil.

Advantageously, a supply of unit portions is provided as "chain" of connected unit portions. Preferably the units are connected by at least one packaging layer extending substantially continuously along plural unit portions. This facilitates advancing and/or dispensing subsequent unit doses. In a supply packaged between opposing foils, preferably both foils are substantially continuous.

Preferably the unit portion of sandwich base product comprises pieces of sandwich base product supplied in pairs or connected portions such as two slices of bread, a cut-open bun or length of French bread, etc. Thus, the sandwich can be folded close for ease of eating.

In particular when at least one of the packaging layers of a packaged ingredient to be dispensed is a foil, the separator may comprise a peeler having a peeling edge with a small radius over which the packaging foil is forced, in particular pulled back, for peeling the packaging foil from another packaging layer and the respective ingredient unit portion of ingredient to be dispensed, the other packaging portion and/or the unit portion of an ingredient being unable to follow the curvature imposed by the small radius of the edge. The edge may be formed in any suitable manner, e.g. comprising an sharp edge of a plate, a fixed rod of small diameter and/or one or more a rotary portions, e.g. rollers or a spindle of small diameter, etc.

Pulling a foil over the peeling edge facilitates advancing the foil and any product packaged with it. The apparatus, in particular at least one separator, may be provided with a winding system for storing packaging foil on a roll, e.g. around a reel, in particular waste packaging foil. This reduces the volume of the stored foil. A winding reel can be driven by a driver. A driven reel can collect the peeled packaging. It can also provide a pulling force on the foil to force the foil around the peeling edge and to separate the foil from the ingredient, the thus unpackaged ingredient can be dispensed thereby. In a particularly advantageous case a driven reel can provide sufficient force to advance ingredient unit portions from their supply, so that a single driving force may suffice for effecting an ingredient dispense and for preparing the apparatus for a subsequent dispense from that dispenser. Preferably the reel is removable from the apparatus, in particular with any foil wound on it.

The apparatus may comprise a heater for heating at least part of an ingredient unit portion. Thus, a heated product may be provided, a half-fabricated product may be cooked or baked to an appropriate finish etc. so that a fresh product may be provided. Advantageously the heater and the packaging material are configured to heat the ingredient while still at least partly packaged. This facilitates use of the apparatus and increases hygiene. In an exemplary embodiment, a plurality of heaters is provided, which may be of different types, e.g. one for toasting bread and another for baking a meat patty or a sausage and the like. Thus, a tosti, a hamburger, a sandwich with warm ham, a hot dog, a salad with freshly toasted croutons etc. may be prepared. Suitable heaters may comprise a grill, a toaster and/or a microwave heater.

The apparatus may comprise a fluid ingredient dispenser for dispensing one or more fluid ingredients, preferably for dispensing a metered quantity. Thus, the sandwich or salad may be provided with (predetermined quantities of) butter, one or more sauces, dressings, etc.

A fluid ingredient dispenser for dispensing one or more fluid ingredients, in particular in an apparatus described herein, may comprise one or more containers containing the fluid ingredient(s) to be dispensed. The dispenser may be configured to be displaced partly or wholly before and/or after a dispense, e.g. for exchanging containers for dispensing different fluid ingredients at one location and/or for bringing at least part of the dispenser closer to (ingredients in) the carrier so as to facilitate distribution of the fluid ingredient and/or to reduce (risks of) splashing. In particular, a part of the dispenser, e.g. a container, may be arranged in a holder and be movable, preferably reversibly, against the elastic force of at least one resilient portion between a first position and a second position, so that the first position may be a default position, e.g. allowing exchange of one container for another for dispensing different ingredients by the dispenser, and the second position may be a dispensing position closer to the assembly. Preferably the first position is relatively high, the second position is relatively low, and the elastic force is sufficient for urging the movable portion, when full, to the first position. This facilitates dispensing from above.

In an embodiment the fluid ingredient dispenser comprises a container containing the fluid ingredient, wherein the container is at least partly deformable, e.g. comprising a movable piston, for forcing the fluid ingredient from the container and wherein the dispenser is configured to deform the container and force the fluid ingredient from the container to dispense the fluid ingredient, e.g. by comprising an actuator to engage at least part of the container. This facilitates dispensing a fluid ingredient, in particular a viscous ingredient, possibly comprising substantially solid parts like a full sauce such as ketchup, mayonnaise, mustard, chopped onion sauce, etc. In particular, the dispenser may be configured to move and deform the container in substantially one action, e.g. comprising an actuator to engage the container for displacing the container from the first to the second position against an elastic force from at least one resilient portion and deforming the container, wherein the resilient portion is configured such that said elastic force is significantly less than the force required to deform the container and dispense the fluid ingredient from it. E.g., the deformable container may comprise a squeezable tube or a cylinder with a movable piston, and the dispenser may comprise at least one actuator for deforming at least part of the container, e.g. moving the piston.

A fluid ingredient dispenser may comprise a profiled spout and/or a spreader, e.g. a spatula. Thus, the fluid ingredient may be provided in a particular distribution, e.g. to cover a relatively wide area and/or to have an aesthetically pleasing shape. In case of a viscous fluid, e.g. butter, at least part of the container, spout and/or spreader may have a heatable portion to increase fluidity of the fluid ingredient at least locally.

A consumer's perception of the preparation time of a sandwich may be reduced and/or acceptance of a waiting time may be increased if the apparatus is configured to display the sandwich or salad in at least one intermediate stadium of its preparation, i.e. before the product is fully prepared according to a particular recipe, e.g. by providing the apparatus with a window and/or a display coupled with a camera. Preferably the product is displayed after each consecutive addition of an ingredient. Thus, the consumer can see the sandwich or salad "grow". To prevent conveying a technical and/or automation atmosphere to the product and/or its preparation, the actual dispensing action of one more ingredients may be hidden from direct view of a consumer, wherein the sandwich or salad is displayed only after each (series of) dispense(s), e.g. the carrier may be moved between a display position and subsequent dispensing positions wherein the carrier is placed to receive a dispensed product. It is conceivable to arrange the apparatus such that after dispense of one additive ingredient the consumer can or must select the subsequent ingredient to be dispensed on the sandwich or salad prepared so far. Thus the consumer can customise the sandwich or salad.

In an embodiment, at least one supply of an ingredient, at least part of a separator and/or a waste storage system is exchangeable. E.g., a supply of packaged ingredients is readily exchangeable for exchange of one supply, e.g. near its "best before" date, with a fresh supply and/or for setting up the apparatus for a different recipe. In another example a reel with stored waste foil is replaceable with an empty reel. Thus, the apparatus is easily cleanable.

Efficiently, at least one exchangeable supply of ingredients is arranged as an exchangeable cartridge. Such cartridge may comprise one or more parts of a separator, in particular a peeler for peeling packaging foil, and/or a storage system for storing waste packaging foil such as (part of) a winding system. Thus, maintenance of the apparatus is facilitated. Further, spilled and/or waste products may be retained within the container, increasing hygiene in the apparatus. In an embodiment substantially all of a dispenser may be exchangeable, e.g. in one integrated cartridge. The cartridge may be reusable, e.g. after emptying, cleaning and/or refilling with a fresh supply of an ingredient. It is conceivable to provide cartridges as part of a subscription system and/or a deposit system. Preferably, the apparatus comprises a payment system to free the apparatus for operation by payment. Thus, the apparatus may be provided and/or operated as a vending machine, preferably as a stand-alone apparatus in a public and/or low-maintenance environment.

In view of the above, in an aspect of the present disclosure there is provided a supply of ingredients individually packaged in unit portions between packaging layers, in particular being packaged between opposing foils. At least part of the supply may be formed as a chain of ingredient unit portions stored on a reel. Thus, operation and maintenance of the apparatus is facilitated. Further aspects comprise a separator comprising a peeler for peeling packaging foil from a packaged unit portion of an ingredient and/or a cartridge for use in the apparatus provided herein.

Another aspect comprises a method of operating and/or maintaining an apparatus as provided herein, the method comprising exchanging a supply of ingredients packaged in unit portions with at least one packaging foil, a peeler and/or a cartridge for a supply of ingredients packaged in unit portions with at least one packaging foil, a peeler and/or cartridge of the apparatus. Such method obviates manual labour and increases hygiene in preparation of sandwiches.

A system for vending sandwiches and/or salads may, in accordance with the above, comprise an assembly for packaging unit portions of ingredients and an apparatus as disclosed herein. In particular, the unit portions may be packaged in packaging layers comprising at least one foil connecting the unit portions extending substantially continuously along plural unit portions, being formed as a chain of individually packaged unit portions for use in the apparatus, wherein preferably the supply is formed as a cartridge for use in the apparatus.

### BRIEF DESCRIPTION OF THE DRAWINGS

The above-described aspects will hereafter be explained with further details and benefits with reference to the drawings showing an embodiment of the invention by way of example, wherein;
Figs. 1A-1C are perspective, front and side views of an apparatus for preparing sandwiches in the form of an enclosed vending machine;
Figs. 2A-2C are perspective, front and side views of the apparatus of Figs. 1A-1C without its outer housing;
Figs. 3A-3D are perspective, front, side and top views of the apparatus of Figs. 2A-2C with an inner housing and a cooling device removed;
Fig. 4A is a top view of the dispenser for dispensing unit portions of bread of the apparatus of Figs. 1A-3D and Fig. 4B is a cross section view as indicated in Fig. 4A;
Fig. 5A shows detail V of Fig. 4A;
Fig. 5B shows a portion of the peeler in more detail;
Figs. 6A-6C are front, side and top views of a heater for heating unit portions of bread of Figs. 4A-5, and Fig. 6D is a side view in a configuration for heating a unit portion of bread;
Figs. 7A-7D are perspective, front, side and top views of a detail of the dispenser assembly for dispensing ingredients on the unit portion of bread of the apparatus;
Figs. 8A-8B are perspective and top views of a dispenser assembly for dispensing one or more fluid ingredients, and Fig. 8C is a cross section view as indicated in Fig. 8B;
Figs. 9A-9B are front and top views of a dispenser assembly for dispensing heated ingredients, here meat patties, Fig. 9C is a cross section view as indicated in Fig. 9B, and Figs. 9D-9E show a detail of Fig. 9C in side view instead of in cross section and in two configurations of use: transport (Fig. 9D) and heating (Fig. 9E), respectively.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

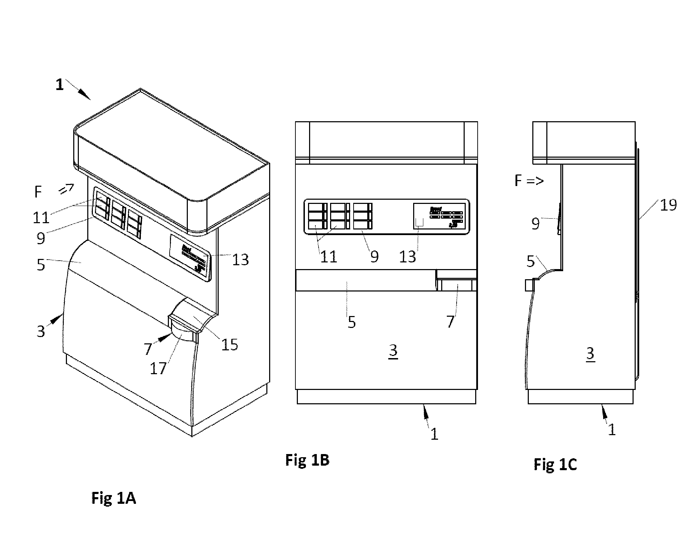

Figs. 1A-1C show an apparatus 1 for automatically preparing sandwiches or salads arranged in the form of a stand-alone sandwich vending machine. The apparatus 1 comprises a housing 3 having a front side F comprising a window 5, a dispenser 7, and an optional user interface 9. The shown user interface 9 comprises buttons 11, e.g. for selection of sandwich according to a particular recipe, and an optional payment system 13. The user interface 9 may comprise other input devices like a dial, a touch-screen, etc. and the payment system 13 may be configured for payment by cash, credit card, debit card, or any other suitable form of payment.

The housing 3 encloses the apparatus, e.g. for reasons of hygiene. The apparatus 1 has a cooled or otherwise climate-controlled interior space, here defined at least in part by the housing 3. In this embodiment the housing 3 is substantially opaque, but window 5 grants a view of part of the interior volume of the apparatus 1. Instead, another display arrangement may be provided, e.g. with a display screen. The shown dispenser 7 comprises a window 15 and a drawer 17 for dispensing prepared sandwiches or salads, but different arrangements are conceivable, e.g. a slot, a serving dish etc. The (drawer 17 of the) dispenser 7 is configured to prevent access to the interior of the apparatus, at least hand- access. To dispose of excess heat from the interior a radiator 19 is provided on a rear side.

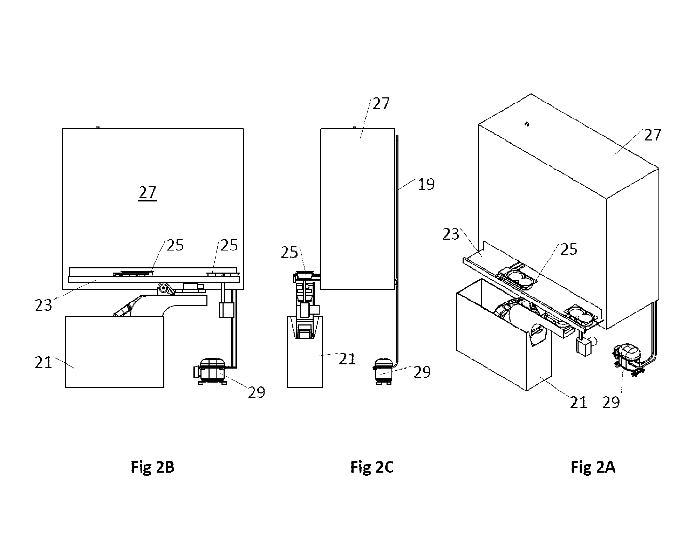

Figs. 2A-2C show, from substantially identical view points as Figs. 1A-1C, the apparatus 1 without the housing 3, so that a number of main interior parts is visible; a dispenser 21 and a transporting system 23 for transporting carriers or, as shown here, assemblies 25 of unit portions of sandwich base product in carriers, as well as an inner housing 27 enclosing a further climate controlled environment. A compressor 29 is connected with the radiator 19 as part of a cooling system. Here, the sandwich base product is bread. The dispenser 21 might be provided with, or replaced by, a unit that provides empty carriers from a stock, for assembling a salad in the carrier.

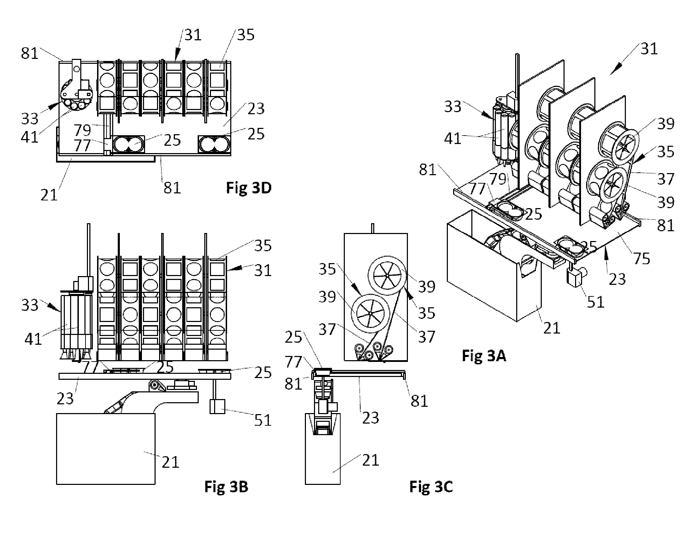

Figs. 3A-3C show, from substantially identical view points as Figs. 1A-1C and 2A-2C, the apparatus 1 with the inner housing 27 and the cooling system removed. Fig. 3D is a top view. Again the dispenser 21 and transporting system 23 for transporting assemblies 25 of unit portions of sandwich base products in carriers are visible. Further, a first dispenser assembly 31 and a second dispenser assembly 33 are visible. The first dispenser assembly 31 comprises a plurality of dispensers 35 for dispensing ingredients from respective supplies 37 of ingredients, which are partly stored on reels 39. The second dispenser assembly 33 comprises a plurality of containers 41 containing fluid ingredients.

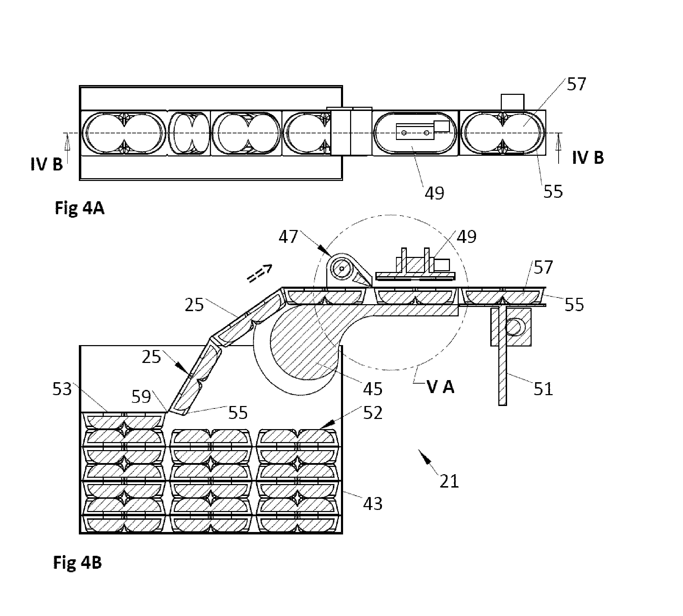

Figs. 4A-4B show the sandwich base product dispenser 21, which comprises a storage container 43, a guide 45, a separator in the form of a peeler 47, a heater 49 and an optional elevator 51. Further, a supply 52 comprising a chain 53 of assemblies 25 is shown, wherein the assemblies 25 comprise trays 55 filled with unit portions of sandwich base product 57 and closed with a top foil 59.

Here, the sandwich base product 57 is bread, provided as cut-open buns. The trays 55 correspond to the shape of the bread 57 and comprise two recesses separated by a raised barrier 58. The trays 55 are foldable about the barrier 58 so that a closable clam-shell package is provided for easy transport of the prepared sandwich. Other types of closures, e.g. a closing foil, possibly with an associated device for providing such closure may be provided in the apparatus if desired. The storage container 43 may be cooled and/or otherwise climate controlled if so desired. Instead of a tray, the sandwich base product may be placed and transported on a substantially flat sheet. In another embodiment, a carrier, e.g. a tray, may be enclosed with the sandwich base product between packaging layers, e.g. opposing foils, separated from the assembly by suitable separators, e.g. opposing peelers.

In an embodiment for preparing salads, trays 55, or other suitable carriers, may be similarly provided from a suitable supply, e.g. comprising a chain of trays 55 interconnected with foil, which is peeled off to separate the trays 55. However, trays 55 or other suitable carriers may also be dispensed from another sort of stock and/or dispenser, e.g. an amount of stacked trays. It is conceivable to provide the apparatus with a dispenser for empty carriers and with a further dispenser for dispensing sandwich base products in the carriers, facilitating selection between a salad and a sandwich. Preferably, also in such apparatus, the sandwich base product ingredient is provided in unit portions which are individually packaged between packaging layers, and the sandwich base product dispenser comprises a separator to separate the packaging layers from each unit portion of sandwich base product.

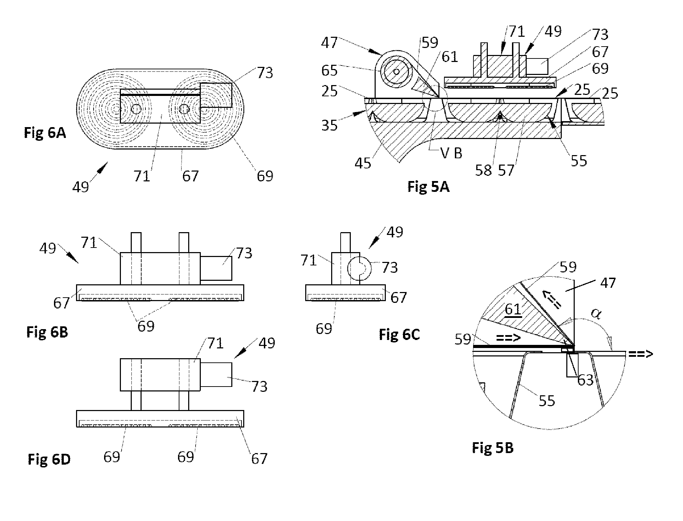

Fig. 5A shows detail VA of Fig. 4B, and Fig. 5B shows detail VB of Fig. 5A. Best seen in Figs. 4B and 5A, the chain 53 is fed from the storage container 43 over the guide 45 and between the guide 45 and the peeler 47 in a feeding direction indicated with an arrow in Fig. 4B. The peeler 47 comprises a wedge shaped wall portion 61 which tapers in the feeding direction (forward direction of the chain 53) and provides a relatively sharp end with a small radius forming a peeling edge 63. The peeler 47 further comprises a reel 65. A portion of the top foil 59 of the supply chain 53 is attached to the reel 65, being fed over the peeling edge 63 and extending over the wedge 61 at an obtuse angle α, here generally in reverse direction, with respect to the forward feeding direction.

Best seen in Fig. 5B, the reel 65 is connected to a suitable driver (not shown) so that, when driven, the reel 65 revolves and exerts a pulling force on the top foil 59 around the peeling edge 63, while the wedge 61 and the weight of the assembly 25 hold the tray 55 down, which pulls the top foil 59 from the tray 55 and separates the two. Thus the bread 57 in the tray 55 is exposed. The peeled top foil 59 is wound on the reel 65 and stored there. The reel 65 is releasably mounted to the engine (not shown) so that it can be removed with the collected foil and be replaced by an empty reel 65. A reel 65 may be reusable after removing the collected foil from it. In another embodiment, the reel 65 and the wedge 61 are removable as an integrated assembly, which may facilitate inspection of (wear of) the edge and/or desired relative placement of the reel 65 and the wedge 61.

In the shown embodiment, the trays 55, and thus the assemblies 25, are interconnected to each other only with the top foil 59, thus providing the chain 53. Once the top foil 59 is removed from the trays 55 the assemblies 25 are separate from each other. This obviates a cutter and/or other devices to separate (assemblies 25 with) unit portions of bread 57. However, a cutter or separator may be provided.

Here, the pulling force on the top foil 59 further provides a driving force for advancing the chain 53 over the guide 45, as indicated by the arrows in Fig. 5B. Thus, further portions of the chain 53 are lifted from the container 43 onto the guide 45 and assemblies 25 that are uncoupled from the chain 53 are advanced by pushing against them with the trays 55 still coupled on the chain. Thus, no further drivers are required. However, another driving force may be provided with other suitable means, e.g. by providing (part of) the guide 45 as a driven transporter, and/or wheels or sprockets engaging corresponding portions of the chain 53.

The heater 49 is arranged to bake or toast the bread 57, here the exposed bread 57 of an assembly 25 after its opening by the peeler 47. Thus, the bread 57 may be provided in the supply 52 as partly-baked products and be freshly finished on demand. Here, the heater 49 is arranged underneath the transporter 43 (Figs 3A-3D) to reduce floor space demand of the apparatus 1.

Figs. 6A-6D show the heater 49 in more detail. The heater 49 comprises a heater body 67 housing a heating coil 69. The heater body 67 is movably arranged in a fitting 71 provided with a driver 73, so that the heater body 67 is movable from a first, relatively high position (Figs. 5A, 6B-6C) to a second, relatively low position (Fig. 6D) under operation of the driver 73. In the second position the heating coils 69 are arranged close to the bread 57 for baking or toasting the bread 57. Operation of the heater 49 may be controlled in accordance with the type of bread 57, a particular recipe and/or optional further conditions, e.g. user preferences indicated via the user interface 9. Obviously, the trays 55 should be configured to withstand the baking action.

The heating coils 69 may be metallic, ceramic and/or quartz or of any other suitable material. Different types of heaters may be provided as well. The heater 49 may be pressed against the bread to provide contact heating. In a particular embodiment, a protective layer, e.g. a sheet material may be provided between the heater 49 and the bread 57 for heating the bread 57 through the layer. The layer may be regularly replaced, e.g. after baking of each subsequent unit portion of bread for hygiene. It is conceivable that a sandwich base product is heated through at least a portion of the packaging material, which may be removed after the heating.

In the present embodiment, the separated assemblies 25 with the optionally baked or toasted bread 57 are raised by the elevator 51 from the level of the guide 45 to the operating level of the transporting system 23 (cf. Fig. 3A-3C). However, an operating level of the guide 45 may be in register with the operating level of the transporter 23.

Best visible on Figs. 2A-3D, the shown transporter 23 is a two-dimensional transporter, comprising a support 75 for supporting the assemblies 25, and a holder 77 holding an assembly 25. The holder 77 may comprise one or more grippers, suction cups or other devices to engage the tray 55 reliably, so that the position of the tray 55 is accurately known. Here, the holder 77 is mounted on linear guides 79, 81 for moving the assemblies 25 in generally orthogonal directions over the support 75. This allows positioning the carrier 55 in any desired position on the support. However, other types of transporters like e.g. continuous belts, magnetic movers etc. in 1-, 2- or 3- dimensional transport arrangement. 2-dimensional arrangement facilitates the combination of flexibility, low spatial use, and acceptable complexity. The transporter 23 allows positioning the assembly 25 below each dispenser 35, 41 for dispensing additives according to desired recipes, in a display position near the window 5 between dispenses, and in the dispenser 7 to dispense the final product.

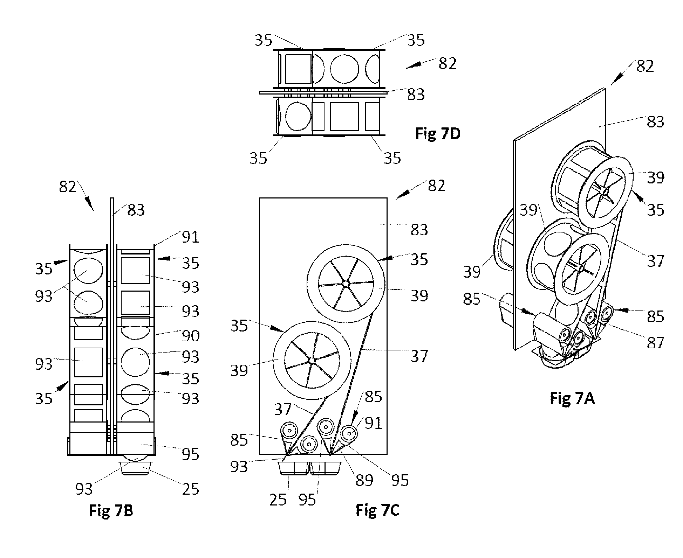

Figs. 7A-7D show a subassembly 82 as a detail of the dispenser assembly 31 shown in Figs. 3A-3D. The subassembly 82 comprises a support 83 on which generally similar dispensers 35 are mounted, here two on each side. Each of these dispensers 35 comprises a reel 39 and a separator 85. The shown separators 85 comprise two opposing peelers 87 of the type generally explained before with respect to Figs. 4A-5B, having a wedge 89 providing a peeling edge and a reel 91 for storing peeled foil. The reels 91 are connected to a suitable driver (not shown) to be driven and to rotate. Each of these dispensers 35 is provided with a supply 37 of unit portions 93 of additives in the form a chain, wherein the unit portions are individually packaged between foils 95. Each of the shown supplies 37 is fed from its storage reel 39 through the corresponding separator 85. The opposite packaging foils 95 are fed around the peeler wedges 89 and attached to the peeler reels 91.

As visible in Figs. 7A-7C, a tray 55, here comprising a unit portion of bread 57, can be arranged underneath the dispenser. As explained with respect to Figs. 4A-5B, in operation of a separator 85, the peeler reels 91 are driven to pull the foils 95 of the supply apart by winding up the foils 95 over the peeling edge. Thus, the foils 95 are separated and the unit portion 93 packaged between them is dispensed from the supply 37 on the tray 55 and the bread 57 in it. During a dispensing action the tray 55 may be displaced with the transporter 23 relative to the dispenser and/or the product being dispensed with a direction and velocity related to those of the dispensed product, e.g. to drape the dispensed additive in suitable form and/or pattern onto (the bread 57 in) the tray 55 and any ingredient dispensed earlier. Thus, folding of slices may be prevented which increases attractiveness of the sandwich or salad. Further, it increases stability of the stack of additive layers so that toppling of the sandwich or salad and associated problems of loss of hygiene and customer dissatisfaction are prevented.

As a safety feature one or more dispensers may be provided with a detector to detect presence and/or position of a tray and/or a sandwich base product before executing a dispense.

Typical ingredients suitable for packing in unit portions between foils for use in the present apparatus besides sandwich base products are slices of food like cheese, ham, sausage, chicken filet, fish filet, hard-boiled egg, omelette, radishes, pickles, cucumber, tomato, mushrooms, olives and fruits, or leafy products like lettuce, spinach, cabbage, etc. Unit portions of somewhat lumpier products than slices, such as sprout-vegetables, croutons, nuts, seeds, shrimps, etc., e.g. for garnishing, are also possible. Also, ingredient unit portions may be provided comprising assemblies of plural items of one or more individual ingredient species, such as plural slices of cheese, ham and/or boiled or fried egg, salad mixtures of different lettuce species and/or other vegetables, mixtures of pickled vegetables, seasoning mixtures, etc. etc., which individual ingredients can suitably be packaged and stored together. This may reduce the number of dispensers in the apparatus and/or the number of process steps when assembling a salad or a sandwich. Due to the unit portion packaging, each ingredient may be packaged in a suitable condition, e.g. vacuum, aerated or with controlled atmosphere, and different ingredients do not affect each other during storage. Further, juicy products e.g. tomato and/or cucumber do not dry out and/or leak onto other products. Thus fresh organoleptic properties of the ingredients are retained to a large extent.

A supply 37 may thus suitably be provided together with a reel 39, or some other storage arrangement, for replenishing the apparatus, preferably together with one or more reels 91 for a separator 85 and/or other apparatus portions in an integrated cartridge.

One or more supports 83 may be displaceable in the apparatus to provide (increased) access to the associated dispensers 35 and/or supplies 37.

An assembly comprising a support 83 with a plurality of supplies and dispensers may be replaceable as a unit. Such unit can itself be configured for operation with cartridges.

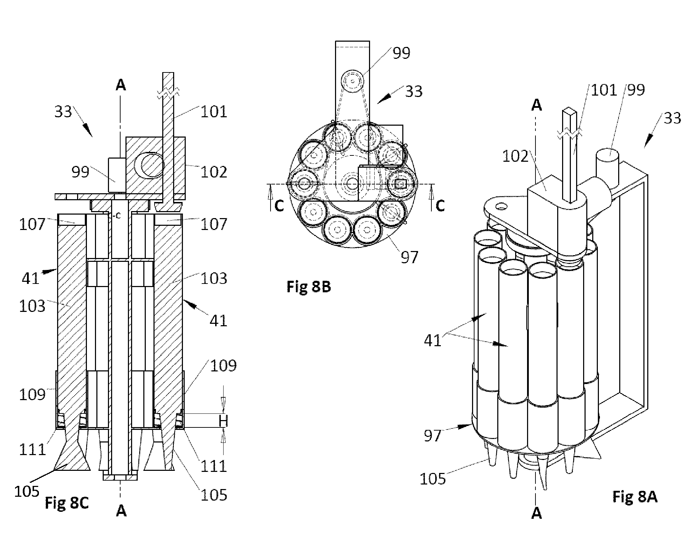

Figs. 8A-8C show the fluid ingredient dispenser assembly 33 which comprises (preferably individually) exchangeable containers 41 containing the fluid ingredient mounted in a rotary stage 97, drivable by a driver 99 about an axis of rotation A. An actuator 101 for engaging on a container 41 and effecting a dispense is arranged above the containers 41, so that the containers 41 can be rotated underneath the actuator 101. The actuator 101 is drivable by a driver 102.

The shown containers 41 comprise a cylinder 103 closed at one end with a movable piston 107 and having a spout 105 at an opposite end. The shown spouts have varying shapes and sizes, dependent on the contents of the container 41. Each container 41 is arranged in a holder 109 comprising a weak spring 111 of just sufficient force to urge the container 41 to the shown default position at a height H above a bottom of the holder 109 (Fig. 8C).

The actuator 101 is configured to engage and press on the piston 103 of the container 41 arranged underneath it, in use. In doing so, the container 41 is pressed down in the holder 109 over the travel H against the force of the spring 111 bringing the spout 105 closer to the sandwich assembly 25 onto which the according ingredient is to be dispensed (not shown). Continued operation of the actuator 101 deforms the container 41 by moving the piston 107 and forces a portion of the contents out of the container 41 to dispense said contents. The dispensed amount may be determined reliably by measuring a variation in the force-feedback on the actuator 101, indicative of a change between the displacement of the container and effecting a dispense, and/or by providing a detector signalling that the container 41 has reached its maximum travel H in the holder, e.g. a pressure switch in the holder 109. At the end of a dispense the actuator 101 is raised fully and disengages the container 41. Thus, another container 41 can be arranged underneath the actuator 101 by rotating the stage 99 for dispensing a different ingredient. Thus, a single actuator 101 can be used for dispensing different ingredients. Further, by releasing the container 41 accidental pressure build-up and/or relaxation effects in the container can be absorbed e.g. by reverse movement of the piston 107, preventing leakage.

Again, during a dispensing action the tray 55 may be displaced by the transporter 23 relative to the dispenser and/or the product being dispensed, e.g. to distribute the dispensed ingredient in a particular pattern or design.

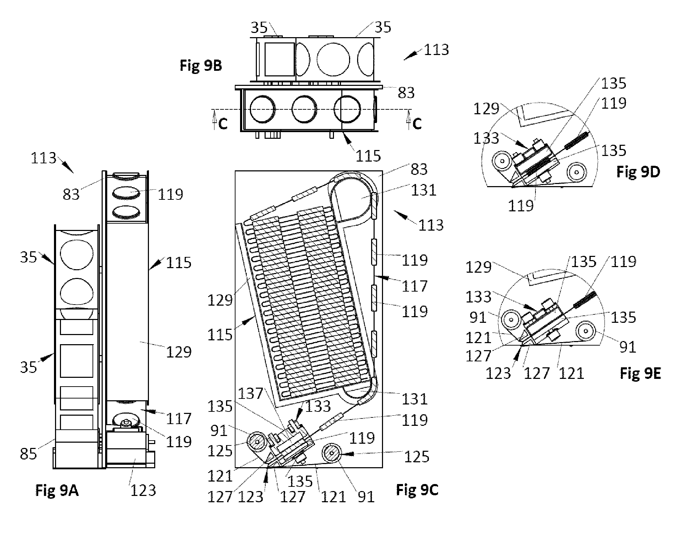

Figs. 9A-9C show a dispenser subassembly 113, which may be provided in the apparatus 1, e.g. instead of a subassembly 82. Similar to the subassembly of Figs. 7A-7D, the presently shown subassembly 113 comprises a support 83 on which on one side two generally similar dispensers 35 are mounted of the afore-described type having a reel 39 and a separator 85 for handling a supply 37 of ingredient unit portions 93 individually packaged between foils 95. On the other side, best visible in Fig. 9C, another dispenser 115 is arranged, which is provided with a supply 117 of ingredient unit portions 119, here hamburger meat patties, individually packaged between packaging layers 121, here foils, and comprising a separator 123 having two opposing peelers 125 of the type generally explained before with respect to Figs. 4A-5B and 7A-7D, each peeler 125 having a wedge 127 providing a peeling edge and a reel 91 for storing peeled packaging foil 121. In this dispenser embodiment 115, the supply 117 is stored in a container 129, e.g. zigzag folded, and fed over guides 131 to the separator 123 for separating and dispensing subsequent unit portions 119.

This dispenser 115 is provided with a heater 133 for heating unit portions 119, in particular single unit portions at a time while they are still packaged. The shown heater 133 comprises opposing shells 135 which are movable with respect to each other and define a space 137 for accommodating one additive unit portion 119 to be heated. Fig. 9D shows the heater 133 in an open state with a unit portion 119 accommodated between the shells 135 and Fig. 9E shows the heater 133 in a closed state, wherein the unit portion 119 is substantially enveloped while still packaged. A closable heater 133 reduces energy demand for heating the unit portion 119 and prevents accidental heating of a possible adjacent unit portion 119 on a chain supply 117.

In at least the closed state the heater 133 is configured to heat the unit portion 119 to a suitable temperature. The shown heater 133 is a microwave oven and the packaging material 121 of the supply 117 is configured for use with microwave radiation, but other types of heaters may be provided.

For safety reasons, the heater 133 may comprise one or more perforators (not shown) to perforate the packaging material prior 121 to or during heating. E.g. at least one shell can comprise one or more sharp tips to perforate and/or rupture at least a portion of a foil 121. Preferably, for hygiene, such perforator is arranged outside the (expected) position of the unit portion to be heated so that the tip(s) do not contact the ingredient. In an aspect, the packaging material may be provided with a weak spot configured to rupture, split or otherwise yield upon a predetermined pressure difference between an inside and an outside of the package.

In operation of the dispenser 115, the supply 117 is advanced, e.g. by pulling action of (the peelers 125 of) the separator 123, until a unit portion 119 is arranged in register with (the space 137 of) the heater 133 (Fig. 9D). The heater 133 is closed (Fig. 9E) and the unit portion 119 is heated according to a desired recipe, e.g. to a predetermined temperature and for a predetermined duration, possibly selectable by user via the user interface 9. Next, the heater 133 is opened (Fig. 9D) and the heated unit portion 119 is advanced from the heater and dispensed by peeling the packaging foils 121 from the ingredient 191 by the peelers 125 as described before with respect to Figs. 7A-7D (not shown). By such advancement and dispense, a subsequent unit portion 119 may be arranged in register with (the space 137 of) the heater 133 (Fig. 9D), readying the dispenser for a following heating and dispensing operation.

In use of the described apparatus 1, a user can select a particular sandwich or salad recipe via the user interface 9, possibly after payment, and the apparatus 1 can be put in operation. To assemble a sandwich, an assembly 25 is dispensed from its supply 21 to the transporter 23 (Figs. 2A-5B), wherein the sandwich base product optionally has been heated, e.g. toasted (Figs. 4A-6C). Next, the assembly 25 is positioned by the transporter 23 under one or more dispensers 33, 35 to receive the corresponding sequence of unit portions of ingredients (Figs. 3A-3D and 7A-9E), possibly after subsequent preparation steps (Figs. 9A-9E). Between one or more dispensing steps the assembly 25 with the sandwich-in-progress may be displayed through the window 5 (Figs. 1A-2C). When done, the assembly 25 is positioned in a dispensing compartment 17 for delivery (Figs. 1A-2C), and the apparatus can be ready for the next sandwich. The same holds for salads, wherein the sandwich base product is left out.

The shown apparatus 1 allows that while a sandwich or salad is prepared, a subsequent assembly with a unit portion of a sandwich base product is prepared and heated. This accelerates dispensing of subsequent sandwiches. In another apparatus (not shown) one or more transporters may be arranged for concurrently transporting plural carriers, allowing parallel preparation of plural sandwiches or salads. In an embodiment, the apparatus may comprise a storage arrangement for storing one or more prepared salads and/or sandwiches, prior to dispensing via a dispenser, e.g. drawer 17 of dispenser 7. A display arrangement may be provided to display the stored prepared product(s). Thus, a number of salads or sandwiches may be prepared in advance, e.g. in view of a period of (expected) peak demand such as during a rush hour. Such storage arrangement may comprise a control system to monitor the number, diversity and/or age of stored product(s) and possibly a waste system can be provided so that an inadvertently overaged product can be discarded and dispensing of fresh products only is ensured.

When a supply of an ingredient is empty and/or close to its expiration date, or in general maintenance proceedings, the supply may be removed. In case of dispensers 35 this may be done by removing any remainder of the supply 37 and any waste packaging material 95 from the reels 39 and 91, or simply removing the set of reels 39, 91 and any connected supply and/or packaging material. A fresh supply 37, possibly including replacement reels 39, 91 may be put back, wherein the web of packaging layers 95 is suitably fed through the peelers 85. Similarly, in the dispenser 115 (Figs. 9A-9C) the container 129 may be emptied and/or removed altogether, when exchanging supplies 117. which also holds mutatis mutandis for the sandwich base product dispenser 21, supply 52 and associated peeler reel 65.

The apparatus may be configured to dispense one or more eating utensils, e.g. a fork, a knife, a spoon etc. Such eating utensils may conveniently be packaged together as, or with a unit portion of an ingredient as explained herein.

The apparatus may comprise one or more detectors to detect machine-readable information, e.g. a barcode, a matrix code, a physical height code and/or an RFID code etc., that may be provided on one or more supplies, e.g. on a cartridge, for programming the apparatus with operating settings for preparation of a sandwich according to a particular recipe and/or for control of particular parameters for that supply like a storage temperature, a shelf life and/or another condition of the ingredient.

In an embodiment, in particular in case of a dispenser 21, 35, or 115 according to Figs. 3A-4B, 7A-7D, or 9A-9E, respectively, the dispenser may be provided with a reversing mechanism to retract unit portions into or onto a supply storage system and away from the separator, e.g. into a container 43 or 129, or onto a reel 39, respectively, wherein the unit portions may be stored under controlled conditions, e.g. in a further refrigerated or climatised local volume.

The apparatus may be provided with one or more communication devices for communication with a remote party, e.g. to transmit one or more status signals to and/or to receive instructions from a remote operator. E.g., a consumer could remotely order (and possibly pay for) (preparation of) a sandwich or salad and collect the prepared product at a later instance. Such communication could run via one or more host stations, wired and/or wireless networks and/or the Internet. E.g. a suitable mobile communication application, e.g. a mobile phone app, could be provided for remotely assembling a salad or sandwich, wherein optionally also locations of individual apparatuses relative to the consumer's location may be indicated - possibly with actual ingredient supply information of the respective apparatus - and the consumer can select the individual apparatus to prepare the salad or sandwich for subsequent collection by the consumer, possibly after suitable authentication, e.g. by means of a subscription, an (individual) order confirmation number and/or pass code agreed by the apparatus, etc. etc.

In an apparatus comprising a camera and a display to show progress of the assembly of a sandwich, camera footage may also be transmitted.

The disclosure is not restricted to the above described embodiments which can be varied in a number of ways within the scope of the claims. For instance, more or less dispensers may be provided, which may be arranged differently with respect to each other. Instead of an assembly of a sandwich base product and a tray, only a carrier may be transported for preparation of a salad in it.

Several unit portions from the same (supply of) ingredient may be dispensed after another for a single sandwich or salad, e.g. providing a double or triple amount of the ingredient. Plural dispensers may be configured to dispense the same type of ingredient, e.g. to account for demand and/or the volumes of unit portions of the considered ingredient.

The apparatus may comprise any means of advertising, including light and/or sound sources. Also, elements and aspects discussed for or in relation with a particular embodiment may be suitably combined with elements and aspects of other embodiments, unless explicitly stated otherwise.

## Claims

1. An apparatus (1) for preparing sandwiches and/or salads, comprising a transporter (23) for transporting a carrier (55), which may contain a unit portion of a sandwich base product (57), and at least one dispenser (21, 35, 115), configured to dispense an ingredient on the carrier from a supply (52, 37, 117) of ingredients in which ingredient unit portions (57, 93, 119) are individually packaged between packaging layers (55,59, 95, 121),
wherein said at least one dispenser comprises a separator (47, 85, 123) configured to separate the packaging layers from each ingredient unit portion to be dispensed.

2. The apparatus (1) according to claim 1, wherein the at least one dispenser (21, 35, 115) is configured to dispense the ingredient from a supply (52, 37, 117) in which ingredient unit portions (57, 93, 119) are individually packaged between packaging layers (55,59, 95, 121), comprising at least one foil (59, 65, 121) connecting the unit portions extending substantially continuously along plural unit portions,
wherein the separator (47, 85, 123) of the at least one dispenser is configured to separate the foil from each ingredient unit portion to be dispensed.

3. An apparatus (1) according to any preceding claim, wherein at least one of the packaging layers (55,59, 95, 121) of a packaged ingredient (57, 93, 119) to be dispensed is a foil (59, 65, 121) and wherein the separator (47, 85, 123) comprises a peeler (47, 87, 125) having a peeling edge (63) over which the foil is forced, in particular pulled back, for separating the foil from another packaging layer (55, 95, 121) and the respective ingredient unit portion (57, 93, 119) to be dispensed.

4. An apparatus (1) according to any preceding claim, comprising a winding system for storing packaging layer material on a reel (65, 91) driven by a driver, wherein preferably the reel is removable from the apparatus.

5. An apparatus (1) according to any preceding claim, comprising a heater (49, 133) for heating at least part of a unit portion of an ingredient (57, 119).

6. An apparatus (1) according to any preceding claim, comprising at least one fluid additive dispenser (33) for dispensing a fluid additive on the carrier (55).

7. An apparatus (1) according to claim 6, wherein the at least one fluid ingredient dispenser (33) comprises a container (41) containing the fluid ingredient, wherein the container is at least partly deformable for forcing the fluid ingredient from the container,
wherein the dispenser is configured to deform the container, e.g. by displacing a piston (107) in the container, and force the fluid ingredient from the container to dispense the fluid ingredient, comprising an actuator (101) configured to apply a deformation force on the container for deforming the container and dispense the fluid ingredient from the container, and wherein the container is arranged in a holder (109), the container preferably being movable by the actuator between a first position and a second position against an elastic force of at least one resilient portion (111), said elastic force being less than the deformation force.

8. An apparatus (1) according to any preceding claim, configured to display the carrier (55) in at least one intermediate stadium of the preparation of the sandwich or salad.

9. An apparatus (1) according to any preceding claim, wherein at least one supply (52, 37, 41, 117) of ingredients (52, 57, 119) and/or at least part of a separator (47, 85, 123) is exchangeable.

10. An apparatus (1) according to claim 9, wherein the exchangeable supply (52, 37, 41, 117) of ingredients (52, 57, 119) is arranged as an exchangeable cartridge, wherein preferably the cartridge comprises at least part of a separator (47, 85, 123) and/or a winding system for storing packaging material (55,59, 95, 121).

11. An apparatus (1) according to any preceding claim, comprising a payment system (13) to free the apparatus for operation by payment.

12. A supply of ingredients (52, 37, 41, 117) wherein the ingredients are individually packaged in ingredient unit portions (52, 57, 119) between packaging layers (55,59, 95, 121), wherein at least part of the supply comprises at least one foil (59, 65, 121) connecting the unit portions extending substantially continuously along plural unit portions, being formed as a chain of individually packaged ingredient unit portions for use in the apparatus (1) of any preceding claim, wherein preferably the supply is formed as a cartridge for use in the apparatus of claims 9 and/or 10.

13. A supply of ingredients (52, 37, 41, 117) according to claim 12, wherein at least one of the packaging layers is a foil, and wherein preferably the supply is stored on a roll.

14. Method of operating and/or maintaining an apparatus (1) according to any one of claims 1-11, comprising exchanging a supply of ingredients (52, 37, 41, 117) packaged in unit portions (52, 57, 119) according to claim 12 and/or 13, a peeler (47, 87, 125) and/or a cartridge for another supply of ingredients according to claim 12 and/or 13, peeler and/or cartridge, respectively.

15. A system for vending sandwiches and/or salads comprising an assembly for packaging unit portions of ingredients; and an apparatus (1) according to any one of claims 1-11.
